# EUROPÄISCHE PATENTSCHRIFT

(11) **EP 2 230 157 B1**
(45) Veröffentlichungstag und Bekanntmachung des Hinweises auf die Patenterteilung: **20.11.2013**
(21) Anmeldenummer: 10002162.5
(22) Anmeldetag: 03.03.2010
(51) Int. Cl.: B62D 25/08

(54) **Frontendträger**
Front end mount
Support d'extrémité avant

(30) Priorität: 20.03.2009 DE 102009014172
(43) Veröffentlichungstag der Anmeldung: 22.09.2010
(73) Patentinhaber: Daimler AG, 70327 Stuttgart (DE)
(72) Erfinder: Junge, Dieter, 21720 Grünendeich (DE); Reese, Eckhard, 21641 Apensen (DE)
(74) Vertreter: JENSEN & SON

(56) Entgegenhaltungen:
- EP-A1- 1 209 069
- WO-A1-01/44039

## Beschreibung

Die Erfindung betrifft einen Frontendträger für eine Karosserie eines Personenkraftwagens nach dem Oberbegriff von Patentanspruch 1, sowie ein Verfahren zum Herstellen eines Frontendträgers für eine Karosserie eines Personenkraftwagens nach dem Oberbegriff von Patentanspruch 8.

Derartige Frontendträger mit Aufnahmemöglichkeiten für Motorhaubenschlösser sind hinlänglich bekannt. Dabei sind das Motorhaubenschloss und der Frontendträger zwei separate Zusammenbauteile, wobei das Motorhaubenschloss mit in der Regel zwei Schrauben in den Frontendträger bzw. ein Blechfrontend des Frontendträgers geschraubt wird. Eine Montagerichtung für einen derartigen Zusammenbau ist in der Regel eine Richtung, die parallel zu einer Hochachse des Personenkraftwagens, im Folgenden z-Richtung genannt, ist.

Ebenso sind Frontendträger bekannt, die als Hybridbauteile ausgebildet sind. Ein derartiger Frontendträger besteht beispielsweise aus einem Trägerteil, das beispielsweise aus einem metallischen Werkstoff gebildet ist, und einem Kunststoffteil, welches um das metallische Trägerteil um- bzw. angespritzt wurde. Das metallische Trägerteil hat dabei den Zweck, dem Frontendträger dieser Art eine gewisse Steifigkeit zu verleihen, während das Kunststoffteil funktionale Aufgaben übernimmt. Auch derartige Frontendträger bieten Möglichkeiten zur Aufnahme eines Motorhaubenschlosses.

Ein gattungsgemässes Dokument ist zum Beispiel EP 1 209 069.

Nachteile der bekannten Bauweisen liegen darin, dass das Motorhaubenschloss zusätzliche Gehäuse- und/oder Aufnahmebleche benötigt, welche ein Gewicht des Frontendträgers und eine Teileanzahl erhöhen, wodurch einerseits das Gewicht des Personenkraftwagens und damit sein Kraftstoffverbrauch sowie Herstellkosten des Personenkraftwagens steigen.

Es ist daher Aufgabe der vorliegenden Erfindung, einen Frontendträger der eingangs genannten Art derart weiter zu entwickeln, dass eine Gewicht- und Kostenreduzierung des Frontendträgers und damit des Personenkraftwagens ermöglicht ist.

Diese Aufgabe wird durch einen Frontendträger für eine Karosserie eines Personenkraftwagens mit den Merkmalen des Patentanspruchs 1, sowie durch ein Verfahren zum Herstellen eines Frontendträgers für eine Karosserie eines Personenkraftwagens mit den Merkmalen des Patentanspruchs 8 gelöst. Vorteilhafte Ausgestaltungen mit zweckmäßigen und nicht-trivialen Weiterbildungen der Erfindung sind in den abhängigen Ansprüchen angegeben.

Ein solcher Frontendträger für eine Karosserie eines Personenkraftwagens umfasst ein insbesondere aus einem metallischen Werkstoff gebildetes Trägerprofil, welches durch ein zumindest bereichsweise des Trägerprofils vorgesehenes Kunststoffteil zu einem Hybridbauteil ergänzt ist, bei welchem mittels des Kunststoffteils ein Fronthaubenschloss zumindest teilweise aufnehmbar ist, wobei erfindungsgemäß zumindest ein Bauelement des Fronthaubenschlosses zumindest teilweise durch das Kunststoffteil gebildet ist. Daraus ergibt sich auf der einen Seite eine Reduzierung eines Gewichts des Frontendträgers infolge von Einsparungen an Montagehilfsmitteln, was das Gewicht des Personenkraftwagens ebenso positiv beeinflusst. Auf der anderen Seite resultiert aus der erfindungsgemäßen Gestaltung des Frontendträgers und der beschriebenen Integration des Fronthaubenschlosses eine Kosteneinsparung infolge eines geringeren Aufwands einer Montage und infolge eines Entfalls von Bauteilen und Werkzeugen zur Montage des Fronthaubenschlosses.

Die besagten Bauelemente des Fronthaubenschlosses sind beispielsweise Gehäuseteile, die in der Regel aus Blech gebildet sind und deren Gewicht beispielsweise im Vergleich zu einem Kunststoff hoch ist. Des Weiteren gehören zu den Bauelementen beispielsweise Lagerungen für bewegliche Teile des Fronthaubenschlosses, Abstützungen für Federn zur Verbringung eines Hakens des Fronthaubenschlosses in eine gewisse Position, Tragstrukturen für die erwähnten Lagerungen und den Haken sowie eine Hakenkimatik selbst, welche eine Fronthaube des Personenkraftwagens sicher und fest gerade bei einer hohen Geschwindigkeit während einer Fahrt des Personenkraftwagens in Position hält.

Durch die erfindungsgemäße Gestaltung des Frontendträgers kann zumindest ein Teil der genannten Bauelemente entfallen, was in der besagten Gewicht- und Kostenreduzierung resultiert.

In einer vorteilhaften Ausführungsform der Erfindung ist im Kunststoffteil und/oder im Trägerprofil zumindest eine Öffnung vorgesehen, mittels welcher ein Lagerelement für das Fronthaubenschloss aufnehmbar ist. Durch die Ausbildung einer derartigen Öffnung im Kunststoffteil und/oder im Trägerprofil können aufwendige, kosten- und gewichtsintensive Befestigungsvorrichtungen entfallen. Des Weiteren ist dadurch eine einfache Montage ohne komplizierte Montageschritte ermöglicht, was eine Dauer der Montage und damit die Kosten derselbigen reduziert.

Die Lagerelemente sind in einer vorteilhaften Ausführungsform der Erfindung am Kunststoffteil und/oder am Trägerprofil befestigtbar. Bei der Befestigung des Lagerelements am Kunststoffteil besteht der Vorteil, dass eine Möglichkeit der Befestigung beispielsweise in Form eines Gewindes einfach und schnell ausbildbar ist, da eine Bearbeitung des Kunststoffteils weniger aufwendig in Bezug auf Zeit und Fertigungstechnik ist, als eine ähnliche Bearbeitung am Trägerprofil, welches insbesondere aus einem metallischen Werkstoff gebildet ist. Infolgedessen entstehen wiederum Kostenvorteile des erfindungsgemäßen Frontendträgers.

Alternativ es möglich, dass das Lagerelement am Trägerprofil befestigbar ist. Dadurch ist eine feste und sichere Verbindung realisiert, welche eine Haltbarkeit einer Schließfunktion des Fronthaubenschlosses bei hohen mechanischen Beanspruchungen gewährleistet, was durch eine Einleitung einer Beanspruchungslast in das metallische Trägerprofil erzielt wird. Dadurch ist eine sichere Funktion des Fronthaubenschlosses auch bei hohen Geschwindigkeiten des Personenkraftwagens gegeben, bei welchen die durch das Fronthaubenschloss aufzunehmenden Beanspruchungsslasten sehr hoch sind. Dieser Aspekt der Erfindung erhöht eine Sicherheit des Personenkraftwagens und damit eine Sicherheit von Insassen desselbigen. In diesem Zusammenhang ist es ebenso denkbar, das Lagerelement sowohl im Kunststoffteil als auch im Trägerprofil zu befestigen, um den erwähnten Sicherheitsaspekt durch eine Verstärkung der Aufnahme der Beanspruchungsslasten weiter positiv zu beeinflussen.

Vorteilhafterweise ist das Lagerelement als ein Schraubelement ausgeführt. Durch diese Ausgestaltungsform lassen sich die beschriebenen Vorteile der Befestigung des Lagerelements am Kunststoffteil und/oder am Trägerprofil mit einer einfachen und schnellen Montage des Lagerelements verknüpfen, wodurch neben der Steigerung der Sicherheit des Personenkraftwagens auch eine Reduzierung der Montagezeit erzielt wird, wodurch die Montagekosten gering gehalten werden können.

Durch die Ausbildung des Lagerelements als ein Schraubelement und der Befestigung im Kunststoffteil und/oder im Trägerprofil kann auch die Teileanzahl des Frontendträgers geringgehalten werden, da das Lagerelement im Kunststoffteil bzw. im Trägerprofil verschraubt werden kann. Zusätzliche Montagehilfsmittel wie beispielsweise Kontermuttern oder ähnliches, welche die Teileanzahl und damit die Kosten erhöhen, können vermieden werden. Nichtsdestotrotz ist es dennoch vorstellbar, das Lagerelement anderweitig als ein Schraubelement auszubilden, beispielsweise als Steck- oder Clipselement, um die Montagezeit und damit die Montagekosten weiter zu reduzieren.

In einer vorteilhaften Ausführungsform des Frontendträgers ist erfindungsgemäß zumindest eine Gewindebuchse im Trägerprofil und/oder im Kunststoffteil vorgesehen. Durch diese Gewindebuchse ist die beschriebene Befestigung des Lagerelements gegeben. Die Anordnung der Gewindebuchse im Trägerprofil und/oder im Kunststoffteil hat den Vorteil inne, dass eine Lasteinleitung der genannten Beanspruchungsslast infolge von Fahrtwind bei hohen Geschwindigkeiten des Personenkraftwagens verbessert werden kann, wodurch eine Beanspruchung des Trägerprofils bzw. des Kunststoffteils des Frontendträgers insgesamt verbessert werden kann, was in einer erhöhten Lebensdauer des Frontendträgers resultiert. Daraus ergeben sich sowohl eine Reduzierung von Reparaturkosten als auch eine Komforterhöhung für einen Nutzer des Personenkraftwagens mit einem derartigen Frontendträger, da eine Ausfallwahrscheinlichkeit infolge eines Versagens des Frontendträgers deutlich reduziert ist.

Durch den Einsatz der Gewindebuchse im Trägerprofil und/oder im Kunststoffteil lässt sich das Trägerprofil bzw. das Kunststoffteil gezielt an Stellen hoher Beanspruchungslasten verstärken, was alle genannten Vorteile mit sich bringt. Des Weiteren ist es so möglich, Herstellungskosten eines derartigen Frontendträgers derart zu senken, dass eine Ausbildung von Befestigungsmöglichkeiten des Lagerelements im Kunststoffteil bzw. im Trägerprofil entfallen kann, da die Gewindebuchse parallel zum Herstellprozess des Kunststoffteils bzw. des Trägerprofils erfolgen kann, wobei die Gewindebuchse nach ihrer Herstellung einfach in das Trägerprofil bzw. das Kunststoffteil montiert wird. Somit können auch Kosten für ein Werkzeug zur Herstellung des Kunststoffteils bzw. des Trägerprofils gering gehalten werden, da, wie beschrieben, eine Ausbildung einer Befestigungsmöglichkeit des Lagerelements nicht von Nöten ist. In diesem Zusammenhang ist ebenso denkbar, die Gewindebuchse als Zukaufteil vorzusehen, da sich ein Einkauf derartiger Kleinteile als zumeist kostengünstiger erweist, als diese selbst herzustellen.

Bei einem weiteren vorteilhaften Aspekt der Erfindung ist im Kunststoffteil und/oder im Trägerprofil ein weiteres Lagerelement aufnehmbar, welches mittels eines Verbindungselements, insbesondere eines Bügels, mit dem ersten Lagerelement verbindbar ist, wobei das Verbindungselement mit dem Kunststoffteil und/oder mit dem Trägerprofil verbindbar ist.

Ein derartiger Bügel erhöht eine Steifigkeit einer Anordnung aus Motorhaubenschloss und Lagerelement, wodurch eine sichere Positionierung der Fronthaube des Personenkraftwagens weiter verstärkt wird. Außerdem wird mittels des Bügels der Montageaufwand hinsichtlich einer Anordnung der Lagerelemente reduziert. Eine Existenz des zweiten Lagerelements erhöht die Steifigkeit der Anordnung aus Fronthaubenschloss und Lagerelementen, wobei vorstellbar ist, dass beispielsweise die Lagerelemente am Bügel in einem ersten Montageschritt befestigt werden, worauf der Bügel mit den beiden Lagerelementen in einem zweiten Montageschritt einfach derart montieren lässt, dass die beiden Lagerelemente in dafür vorgesehene Öffnungen einschiebbar sind. Das heißt, dass die beiden Lagerelemente mit einem Montageschritt mittels des Bügels montierbar und befestigbar sind. Auch aus diesem Aspekt resultiert eine Reduzierung der Montagekosten.

Zur weiteren Reduzierung der Montagezeit und damit der Montagekosten ist das Verbindungselement bzw. der Bügel mittels einer Clips- und/oder einer Steck- und/oder einer Einrastverbindung mit dem Kunststoffteil und/oder mit dem Trägerprofil verbindbar. Ebenso sind andere Ausführungsformen von Schnellverbindungen denkbar. Alle haben den Vorteil, dass eine Montage des Verbindungselements beispielsweise in Form eines Bügels schnell, unaufwendig und damit zeit- und kostengünstig vonstatten geht.

Bei einem erfindungsgemäßen Verfahren zum Herstellen des Frontendträgers für die Karosserie des Personenkraftwagens, bei welchem das Trägerprofil, welches aus einem metallischen Werkstoff gebildet ist, durch das zumindest bereichsweise des Trägerprofils vorgesehene Kunststoffteil, mittels welchem das Fronthaubenschloss zumindest teilweise aufnehmbar ist, zu einem Hybridbauteil ergänzt wird, wird zumindest ein Bauelement des Fronthaubenschlosses zumindest teilweise durch das Kunststoffteil gebildet. Wie schon beschrieben, kann es sich bei dem Bauelement beispielsweise um ein Gehäuse bzw. ein Gehäuseteil, Umlagerungen, Abstützungen für Federn oder um Tragstrukturen etc. handeln. In jeglicher Hinsicht wird dadurch eine Gewichtsreduzierung des gesamten Frontendträgers und damit eine Gewichtsreduzierung des Personenkraftwagens erzielt, was in einem niedrigeren Kraftstoffverbrauch des Personenkraftwagens und damit in einer Reduzierung von CO₂-Emissionen resultiert.

In einer vorteilhaften Ausführungsform des erfindungsgemäßen Verfahrens wird das rohrförmige Trägerprofil mittels eines Innenhochdruckumformprozesses ausgebildet, wodurch komplizierteste Geometrien in kurzer Zeit herstellbar sind. Dadurch lassen sich mechanische Vorteile hinsichtlich einer steifen und belastungsfähigen Geometrie mit kurzen Herstellzeiten verknüpfen, die Herstellkosten und damit Gesamtkosten des Trägerprofils reduzieren.

Bei einem weiteren vorteilhaften Aspekt des Verfahrens wird das Kunststoffteil mittels eines Spritzgussverfahrens ausgebildet. Mit einem derartigen Verfahren ist es möglich, dass durch beispielsweise den Innenhochdruckumformprozess hergestellte Trägerprofil, das aus einem metallischen Werkstoff gebildet ist, mit einem Kunststoff zu umspritzen und dadurch das Kunststoffteil auszubilden. Das derartige Spritzgussverfahren ermöglicht beispielsweise, funktionale Strukturen und Elemente während des Verfahrens mit auszubilden, um sowohl Zeit für einen derartigen Herstellprozess einzusparen, als auch eine Teileanzahl gering zu halten, was die Kosten positiv beeinflusst. Bei der genannten Reduzierung der Teileanzahl handelt es sich beispielsweise um eine Einsparung von Befestigungs- und/oder Verbindungselementen wie beispielsweise Muttern oder Clipse etc. Des Weiteren ist durch die Ausbildung der genannten Elemente aus Kunststoff statt aus Metall eine Gewichtseinsparung möglich, die die bereits beschriebenen Vorteile mit sich bringt. Das Spritzgießen und das Innenhochdruckumformen erfolgen vorteilhafter Weise in einem gemeinsamen Werkzeug, was den Herstellungsprozess besonders effizient gestaltet. Des Weiteren treten dabei keine Umsetzungsfehler auf, so dass die Reproduzierbarkeit der Herstellung aufgrund der fehlenden Toleranzen oder Transportungenauigkeiten gewährleistet ist. Nacharbeiten entfallen, was die Herstellungszeit und die -kosten reduziert.

Darüber hinaus ist es durch das Spritzgussverfahren möglich, eine maßgeschneiderte Anlagenkontur für das Fronthaubenschloss bzw. dessen zu montierenden und nicht ersetzten Teile zu schaffen, wodurch bessere Lagetoleranzen des Motorhaubenschlosses realisiert werden. Damit einhergeht eine optimale Abstützung und Ausrichtung des Hakens oder der Haken, der bzw. die die Aufgabe erfüllt bzw. erfüllen, die Fronthaube des Personenkraftwagens auch bei hohen Geschwindigkeiten und damit bei hohen Belastungen sicher in einer geschlossenen Position zu halten.

Wird eine Öffnung im Kunststoffteil, mittels welcher das Lagerelement für das Fronthaubenschloss aufnehmbar ist, durch das Spritzgussverfahren ausgebildet, können eine Anzahl an Montageschritten und damit Montagekosten gering gehalten werden. Die Ausbildung der Öffnung während des Umspritzens des Trägerprofils mit Kunststoff zur Ausbildung des Spritzgussverfahrens spart zumindest einen sich daran anschließenden Herstellungsschritt zur Einbringung der Öffnung ein. Bei diesem nachfolgenden Schritt könnte es sich beispielsweise um eine Bohrung handeln, mittels welcher die Öffnung in das Kunststoffteil eingebracht wird. Dieser zusätzliche Montageschritt ist durch die erfindungsgemäße Ausführungsform des Verfahrens, bei dem die Öffnung in das Kunststoffteil durch das Spritzgussverfahren ausgebildet wird, obsolet.

Bei einer weiteren oder alternativen Öffnung im Trägerprofil, mittels welcher das Lagerelement für das Fronthaubenschloss alternativ oder ebenso aufnehmbar ist, erweist es sich als äußerst vorteilhaft, diese Öffnung durch den Innenhochdruckumformprozess auszubilden. Diese Ausbildung der Öffnung im Trägerprofil ist beispielsweise durch Stanzen mittels eines Stempels in einem Werkzeug für den Innenhochdruckumformprozess möglich. Durch diese mehr oder minder zeitparallele Ausbildung der Öffnung lässt sich, wie schon im Zusammenhang mit der Öffnung im Kunststoffteil beschrieben, eine Herstellungszeit des Trägeprofils reduzieren, was mit einer Reduzierung der Herstellkosten einhergeht.

An dieser Stelle sei erwähnt, dass die Ausbildung der Öffnung im Kunststoffteil als auch die Ausbildung der Öffnung im Innenhochdruckumformprozess also sowohl während der Herstellung des jeweiligen Teils geschehen kann, als auch eine nachträgliche Einbringung der jeweiligen Öffnung durch einen sich anschließenden Arbeitsgang möglich ist. Dies kann sich beispielsweise insofern als vorteilhaft erweisen, als dass Mehrkosten für ein dann aufwendigeres Werkzeug eingespart werden können.

Bei einem weiteren vorteilhaften Aspekt des erfindungsgemäßen Verfahrens wird eine Gewindebuchse im Kunststoffteil und/oder im Trägerprofil, mittels welcher das Lagerelement befestigbar ist, während des Spritzgussverfahrens bzw. während des Innenhochdruckumformprozesses ausgebildet oder eingefügt. Wie schon im Zusammenhang mit dem erfindungsgemäßen Frontendträger beschrieben, ermöglicht eine derartige Gewindebuchse eine gezielte Verstärkung des Trägerprofils bzw. des Kunststoffteils zur Erhöhung der Lebensdauer infolge einer günstigeren Einleitung von Beanspruchungslasten. Dieser Vorteil lässt sich mit einer schnellen und damit kostengünstigen Herstellung des Frontendträgers derart verknüpfen, dass eben die Gewindebuchse schon während des Spritzgussverfahrens bzw. während des Innenhochdruckumformprozesses ausgebildet oder eingefügt wird. Somit ist ein belastbares langlebiges Bauteil mit einem schnellen und kostengünstigen Herstellungsprozess kombiniert.

Zur weiteren Reduzierung des Montageaufwands und der Montagekosten wird das Lagerelement, das beispielsweise die Form eines Lagerbolzens aufweist, als Einlegeelement während des Spritzgussverfahrens integriert. Das Lagerelement wird dann mittels des Spritzgussverfahrens ausgebildeten Kunststoffteils gehalten. In diesem Falle muss lediglich eine Verschraubung des Fronthaubenschlosses bzw. verbleibender zu montierenden Fronthaubenschlossteile erfolgen. Somit ist die Anzahl an Montageschritten und damit der Montageaufwand auf ein Minimum reduziert, was einen Kostenfaktor des Herstell- und Montageprozesses positiv beeinflusst. In Zusammenhang sowohl mit dem erfindungsgemäßen Verfahren als auch mit dem erfindungsgemäßen Frontendträger ist es natürlich ebenso möglich, eine Mehrzahl an Öffnungen für eine Mehrzahl an Lagerelementen auf die beschriebenen vorteilhaften Weisen auszubilden.

Bei der Ausbildung des Lagerelements bzw. der Lagerelemente ist es äußerst vorteilbehaftet, das Lagerelement bzw. die Lagerelemente mittels des Spritzgussverfahrens auszubilden. Dies birgt den Vorteil, dass die Teileanzahl weiter reduziert wird, da separate Bauteile in Form des Lagerelements bzw. der Lagerelemente vermieden werden. Dieser Vorteil lässt sich insofern weiterverstärken, wenn das derartige Lagerelement während der Ausbildung des Kunststoffteils durch das Spritzgussverfahren ausgebildet wird. Somit ist ein zusätzlicher Herstellungsschritt des Lagerelements vermeidbar. Ein weiterer Vorteil ist der, dass durch eine Ersetzung des in der Regel metallischen Lagerelements durch das Lagerelement am Kunststoffteil eine Gewichtsreduzierung erzielt wird, die die bereits beschriebenen Vorteile in Form einer Kraftstoffeinsparung und einer Reduzierung der CO₂-Emissionen zur Folge hat. Überhaupt lassen sich durch das Spritzgussverfahren funktionale Elemente in einem Arbeitsschritt ausbilden, so z. B. Verbindungsvorrichtungen für Steck- und/oder Clipsverbindungen oder für anderweitige Arten von Schnellverbindungen. In jeglicher Hinsicht lassen sich zusätzliche Bauteile vermeiden, wodurch die Teileanzahl und damit die Kosten gering gehalten werden.

Weitere Vorteile, Merkmale und Einzelheiten ergeben sich aus den nachfolgenden Beschreibungen dreier Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in:

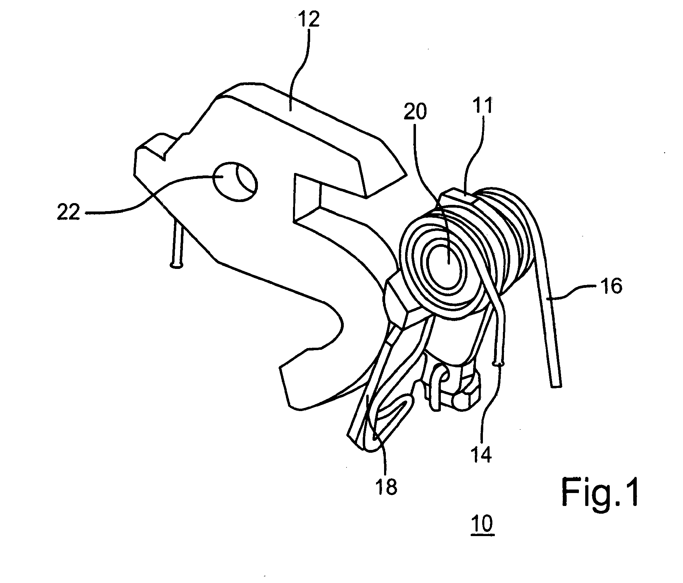

- Fig. 1: eine perspektivische Ansicht eines Fronthaubenschlosses mit einer Hebelkinematik mit einem Haken und Federelementen,

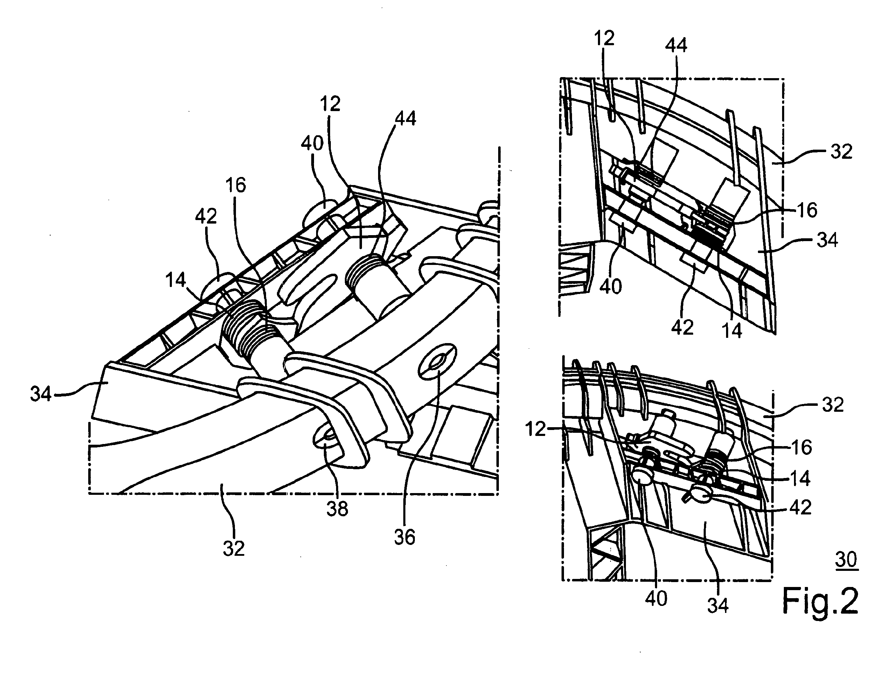

- Fig. 2: drei perspektivische Ansichten einer Ausführungsform eines Frontendträgers für eine Karosserie eines Personenkraftwagens, bei welchem ein aus einem metallischen Werkstoff gebildetes Trägerprofil durch ein Kunststoffteil zu einem Hybridbauteil ergänzt ist und bei welchem mittels das Kunststoffteiles das Fronthaubenschloss gemäß Fig. 1 so aufnehmbar ist, dass mehrere Bauelemente des Fronthaubenschlosses durch das Kunststoffteil gebildet sind,

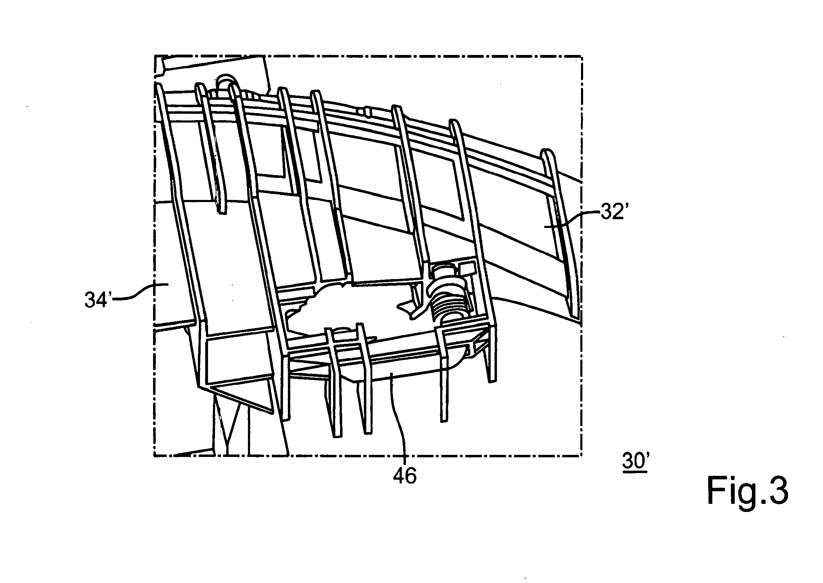

- Fig. 3: eine perspektivische Ansicht einer Ausführungsform eines Frontendträgers für eine Karosserie eines Personenkraftwagens, bei welchem ein aus einem metallischen Werkstoff gebildetes Trägerprofil durch ein Kunststoffteil zu einem Hybridbauteil ergänzt ist und bei welchem mittels das Kunststoffteiles das Fronthaubenschloss gemäß Fig. 1 so aufnehmbar ist, dass mehrere Bauelemente des Fronthaubenschlosses durch das Kunststoffteil gebildet sind, und

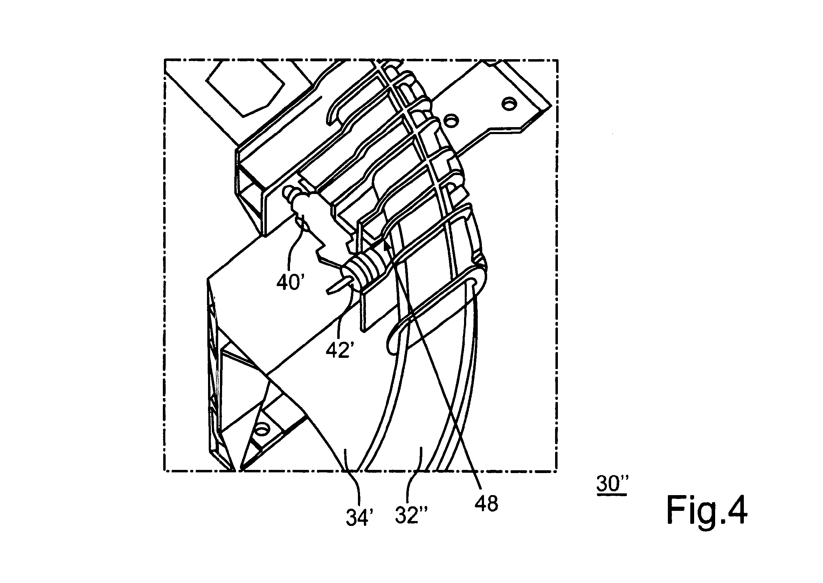

- Fig. 4: eine perspektivische Ansicht einer Ausführungsform eines Frontendträgers für eine Karosserie eines Personenkraftwagens, bei welchem ein aus einem metallischen Werkstoff gebildetes Trägerprofil durch ein Kunststoffteil zu einem Hybridbauteil ergänzt ist und bei welchem mittels das Kunststoffteiles das Fronthaubenschloss gemäß Fig. 1 so aufnehmbar
ist, dass mehrere Bauelemente des Fronthaubenschlosses durch das Kunststoffteil gebildet sind.

Während Fig. 1 ein Fronthaubenschlossinnenleben zeigt, das lediglich eine Hebelkinematik, Federelemente und Abschätzungsmöglichkeiten für diese Federelemente umfasst, bei dem also weitere Blechteile beispielsweise für das Gehäuse entfallen, zeigen Fig. 2, Fig. 3 und Fig. 4 je eine Ausführungsform eines Frontendträgers, welcher ein aus einem metallischen Werkstoff gebildetes Trägerprofil umfasst, welches wiederum durch ein das Trägerprofil bereichsweise umgebendes Kunststoffteil zu einem Hybridbauteil ergänzt ist, bei welchem das Fronthaubenschloss aus Fig. 1 mittels des Kunststoffsteils aufnehmbar ist.

Die Fig. 1 zeigt ein Fronthaubenschloss 10. Das Fronthaubenschloss 10 umfasst eine Hebelkinematik 12, die mittels eines Blechteils 11 mit Federelementen 14 und 16 verbunden ist. Die Federelemente 14 und 16 sind einerseits mittels eines Abstützelements 18 abgestützt. Ein korrespondierendes Abstützelement für eine andere Seite der Federelemente 14 und 16 wird nicht vom Fronthaubenschloss 10 in Fig. 1 umfasst, da es von einem Kunststoffteil eines Frontendträgers, wie er gemäß den Fig. 2, 3 und 4 beschrieben ist, ersetzt wird.

Die Hebelkinematik 12 des Fronthaubenschlosses 10 hat die Aufgabe, eine Fronthaube eines Personenkraftwagens während hohen Geschwindigkeiten dieses geschlossen zu halten. Dazu hakt die Hebelkinematik 12 in ein korrespondierendes Profil an der Fronthaube ein. Durch Federkräfte der Federelemente 14 und 17 wird die Hakenkinematik 12 und damit die Fronthaube des Personenkraftwagens geschlossen gehalten, auch bei hohen Geschwindigkeiten, bei denen eine Belastung sehr hoch ist.

Über Durchgangsöffnungen 20 und 22 wird das Fronthaubenschloss 10 an einer korrespondierenden Haltevorrichtung befestigt. Diese Haltevorrichtung kann beispielsweise ein Kunststoffteil eines Frontendträgers gemäß den Fig. 2 , 3 und 4 sein. Durch die Durchgangsöffnungen 20 und 22 werden Lagerelemente in der Regel in Form von Lagerbolzen geführt und am Frontendträger befestigt.

Das Fronthaubenschloss 10 in Fig. 1 stellt dabei ein fertiges Bauteil dar, d. h. dass keine weiteren Bauelemente von Nöten sind. Dies bedeutet, dass wie in Fig. 1 zu sehen ist, Bauelemente wie eben die beschriebenen nicht vorhandenen Abstützelemente, aber insbesondere auch weitere Blechteile und/oder Kunststoffteile für ein Gehäuse des Fronthaubenschlosses 10 für eine gewollte Funktion des Fronthaubenschlosses 10 nicht nötig sind. Die beschriebenen Bauelemente werden durch das Kunststoffteil des Frontendträgers gemäß den Fig. 2 bis 4 ersetzt, was in einer Gewichtsreduktion des Fronthaubenschlosses 10 und damit des Personenkraftwagens mit einem solchen Fronthaubenschloss 10 einhergeht. Das Fronthaubenschloss 10, wie es in Fig. 1 dargestellt ist, kann also ohne weitere Bauelemente in einen Frontendträger verbaut werden.

Die Fig. 2 zeigt einen Frontendträger 30 für eine Karosserie eines Personenkraftwagens mit einem aus einem metallischen Werkstoff gebildeten Trägerprofil 32, welches durch ein das Trägerprofil 32 bereichsweise umgebendes Kunststoffteil 34 zu einem Hybridbauteil ergänzt ist.

Das Kunststoffteil 34 weist eine Aufnahmemulde auf. Diese Aufnahmemulde wird bei der Ausbildung des Kunststoffteils 34 mittels eines Spritzgussverfahrens parallel ausgebildet, wodurch eine Herstellungszeit und damit Herstellungskosten gering gehalten werden. Mittels der Aufnahmemulde ist das Fronthaubenschloss 10 aus Fig. 1 mit den genannten Bauelemente in Form der Federelemente 14 und 16 und dem Abstützungselement 18 aufnehmbar. In Fig. 2 weiterhin zu sehen ist ein weiteres Federelement 44, das in Fig. 1 von der Hebelkinematik 12 verdeckt ist.

Das Fronthaubenschloss 10 wird aus einer Richtung, die parallel zu einer Hochachse des ebenerdig stehenden Personenkraftwagens parallel ist und die im Folgenden als z-Richtung bezeichnet wird, in die Aufnahmemulde eingebracht und mittels Lagerbolzen 40 und 42 am Kunststoffteil 34 des Frontendträgers 30 befestigt. Die Lagerbolzen 40 und 42 werden durch Öffnungen im Kunststoffteil hindurchgeführt und mittels Gewindebuchsen 36 und 38 im Trägerprofil 32 fixiert. Die Öffnungen im Kunststoffteil 34 werden während des Spritzgussverfahrens ausgebildet. Auch die Gewindebuchsen 36 und 38 können beispielsweise mittels Einlegerelemente während eines Herstellungsprozesses des Trägerprofils 32, der beispielsweise die Form eines Innenhochdruckumformprozesses aufweist, ausgebildet werden. Durch diese Integration von Prozessen können eine Montagezeit und damit Montagekosten gering gehalten werden.

Wie in Fig. 2 zu sehen ist, ermöglicht ein derartig integriertes Fronthaubenschloss 10 eine Reduzierung einer Teileanzahl und eine Reduzierung eines Gesamtgewichts des Frontendträgers 30. Das Kunststoffteil 34 des Frontendträgers 30 ersetzt somit eine Anzahl an Bauteilen des Fronthaubenschlosses 10. Vorteilhafterweise sind die Lagerbolzen 40 und 42 als Schraubelemente ausgebildet, die in die Gewindebuchsen 36 und 38 eingeschraubt werden. Nicht desto weniger können die beschriebenen Öffnungen und/oder die Gewindebuchsen 36 und 38 nach dem jeweiligen Herstellungsprozess des korrespondierenden Bauteils eingebracht werden, die Gewindebuchsen 36, 38 beispielsweise durch Einpressen, die Öffnungen beispielsweise durch Bohren.

Die Fig. 3 zeigt eine alternative Ausführungsform eines Frontendträgers 30', der wie der Frontendträger 30 gemäß Fig. 2 ein aus einem metallischen Werkstoff gebildetes Trägerprofil 32' umfasst, welches durch ein Kunststoffteil 34' zu einem Hybridbauteil ergänzt ist. Wie in Fig. 2 ist bei dem Kunststoffteil 34' in Fig. 3 eine Aufnahmemulde vorgesehen, die während eines Herstellungsverfahrens des Kühlstoffteils 34' in Form eines Spritzgussverfahrens parallel ausgebildet wird. Auch beim Frontendträger 30' wird ein Fronthaubenschloss 10 gemäß Fig. 1 wie eben auch in Fig. 2 durch die Aufnahmemulde aufgenommen. Alternativ zum Frontendträger 30 in Fig. 2 ist das Fronthaubenschloss 10 bzw. seine verbleibenden Bauelemente mittels eines Bügels 46 im Kunststoffteil 34' des Frontendträgers 30' fixiert. Der Bügel 46 ist dabei mit durch Durchgangsöffnungen im Kunststoffteil 34' und durch die Durchgangsöffnungen 20 und 22 des Fronthaubenschlosses 10 eingeführten Lagerbolzen einstückig ausgebildet. Alternativ können der Bügel 46 und die Lagerbolzen, beispielsweise die Lagerbolzen 40 und 42 aus Fig. 2 als separate Bauteile ausgebildet sein, wobei der Bügel 46 die Lagerbolzen dann verbindet.

In jegliche Ausführungsform wird der Bügel 46 durch eine korrespondierende Clipsverbindung mittels Rastelemente im Kunststoffteil 34' eingeklickt. Durch eine derartige Schnellverbindung ist eine schnelle Montage des Fronthaubenschlosses 10 im Frontendträger 30' realisiert, was die Montagezeit und damit die Montagekosten reduziert. Mittels des Bügels 46 können somit zwei Lagerbolzen bzw. Lagerelemente in einem Arbeitsschritt montiert werden. Die Länge der Lagerelemente kann dabei so gestaltet sein, dass sie auch in das Trägerprofil 32' hineinreichen. Eine Hauptlast im Falle einer Belastung des Fronthaubenschlosses 10, beispielsweise bei hohen Geschwindigkeiten, wird in dieser Ausführungsform in Fig. 3 durch das Kunststoffteil 34' aufgenommen. Auch beim Frontendträger 30' ist die Montagerichtung die z-Richtung.

Die Fig. 4 zeigt eine weitere Ausführungsform eines Frontendträgers 30", der ebenso wie die Frontendträger 30 bzw. 30' der Fig. 2 und 3 ein aus einem metallischen Werkstoff gebildetes Trägerprofil 32" umfasst, welches durch ein Kunststoffteil 34" zu einem Hybridbauteil ergänzt ist. Auch das Kunststoffteil 34" bietet die Möglichkeit einer Integration eines Fronthaubenschlosses 10 gemäß Fig. 1. Hierbei ist allerdings nun keine Aufnahmemulde vorgesehen, so dass die Montagerichtung parallel zu einer im Wesentlichen in Längsrichtung des Personenkraftwagens verlaufenden Achse ist, die im Folgenden als x-Richtung bezeichnet wird. Bei dieser Ausführungsform sind durch die Durchgangsöffnungen 20 und 22 des Fronthaubenschlosses 10 Lagerelemente in Form von Lagerbolzen 40' und 42' und durch korrespondierende Durchgangsöffnungen im Kunststoffteil 34" geführt. Dabei können nicht dargestellte Unterlegscheiben vorgesehen sein, um eine feste Anbindung zu ermöglichen. Die Lagerbolzen 40' und 42' sind im Frontendträger 30" der Fig. 4 im Trägerprofil 32" verschraubt. Die Ausbildung der Lagerbolzen 40' und 42' als Schraubelemente beschleunigt die Montage des Fronthaubenschlosses 10, was die Montagekosten positiv beeinflusst. Zur Gewährleistung einer Ausrichtung der Hebelkinematik 12 des Fronthaubenschlosses 10 ist eine Kunststoffunterstützung 48 vorgesehen, die bei einer Herstellung des Kunststoffteils 34" mittels eines Spritzgussvefahrens parallel mit ausgebildet wird. Auch dadurch lässt sich eine Herstellungszeit des Kunststoffteils 34" und damit Herstellungskosten einsparen. Die Hauptlast des Fronthaubenschlosses 10 bei dem Frontendträger 30" nimmt in diesem Falle das Trägerprofil 32" auf. Zur Verbesserung einer Lastaufnahme können beim Frontendträger 36" beispielsweise wie beim Frontendträger 30 in Fig. 2 Gewindebuchsen vorgesehen sein, die die Lagerbolzen 40' bzw. 42' eingeschraubt werden.

Aus der Zusammenschau der Fig. 1 bis 4 wird deutlich, dass durch die beschriebenen Ausführungsformen des Frontendträgers und die beschriebene Integration des Fronthaubenschlosses eine Gewichts- und Teileanzahlreduzierung möglich ist, was einerseits einem Kraftstoffverbrauch des Personenkraftwagens mit einem derartigen Frontendträger und andererseits Montage- und Herstellkosten reduziert. Des Weiteren sind der Montageaufwand und damit die Montagekosten deutlich gesenkt durch die Schaffung von zentralen Befestigungsstellen, beispielsweise in Form von Schraubstellen, und einer Befestigung bzw. Verschraubung in x-Richtung.

## Patentansprüche

1. Frontendträger (30) für eine Karosserie eines Personenkraftwagens mit einem insbesondere aus einem metallischen Werkstoff gebildeten Trägerprofil (32), welches durch ein zumindest bereichsweise des Trägerprofils (32) vorgesehenes Kunststoffteil (34) zu einem Hybridbauteil ergänzt ist, bei welchem mittels des Kunststoffteils (34) ein Fronthaubenschloss (10) zumindest teilweise aufnehmbar ist,
**dadurch gekennzeichnet, dass**
zumindest ein Bauelement des Fronthaubenschlosses (10) zumindest teilweise durch das Kunststoffteil (34) gebildet ist.

2. Frontendträger (30) nach Anspruch 1,
**dadurch gekennzeichnet, dass**
im Kunststoffteil (34) und/oder im Trägerprofil (32) zumindest eine Öffnung vorgesehen ist, mittels welcher ein Lagerelement (40, 42) für das Fronthaubenschloss (10) aufnehmbar ist.

3. Frontendträger (30) nach Anspruch 2,
**dadurch gekennzeichnet, dass**
dass das Lagerelement (40, 42) am Kunststoffteil (34) und/oder am Trägerprofil (32) befestigbar ist.

4. Frontendträger (30) nach einem der Ansprüche 2 oder 3,
**dadurch gekennzeichnet, dass**
das Lagerelement (40, 42) als Schraubelement (40, 42) ausgeführt ist.

5. Frontendträger (30) nach einem der Ansprüche 3 oder 4,
**dadurch gekennzeichnet, dass** im Trägerprofil (32) und/oder im Kunststoffteil (34) zumindest eine Gewindebuchse (36, 38) vorgesehen ist.

6. Frontendträger (30) nach einem der vorhergehenden Ansprüche,
**dadurch gekennzeichnet, dass**
zumindest ein weiteres Lagerelement (40, 42) aufnehmbar ist, welches mittels eines Verbindungselements (46), insbesondere eines Bügels (46), mit dem anderen Lagerelement (40, 42) verbindbar ist, wobei das Verbindungselement (46) mit dem Kunststoffteil (34) und/oder dem Trägerprofil (36) verbindbar ist.

7. Frontendträger (30) nach Anspruch 6,
**dadurch gekennzeichnet, dass**
das Verbindungselement (46) mittels einer Clips- und/oder einer Steck- und/oder einer Einrastverbindung mit dem Kunststoffteil (34) und/oder dem Trägerprofil (32) verbindbar ist.

8. Verfahren zum Herstellen eines Frontendträgers (30) für eine Karosserie eines Personenkraftwagens, bei welchem ein insbesondere aus einem metallischen Werkstoff gebildetes Trägerprofil (32) durch ein zumindest bereichsweise des Trägerprofils (32) vorgesehenes Kunststoffteil (34), mittels welchem ein Fronthaubenschloss (10) zumindest teilweise aufnehmbar ist, zu einem Hybridbauteil ergänzt wird,
**dadurch gekennzeichnet, dass**
zumindest ein Bauelement des Fronthaubenschlosses (10) zumindest teilweise durch das Kunststoffteil (34) gebildet wird.

9. Verfahren nach Anspruch 8,
**dadurch gekennzeichnet, dass**
das Trägerprofil (32) mittels eines Innenhochdruckumformprozesses ausgebildet wird.

10. Verfahren nach einem der Ansprüche 8 oder 9,
**dadurch gekennzeichnet, dass**
das Kunststoffteil (34) mittels eines Spritzgussverfahrens ausgebildet wird.

11. Verfahren nach Anspruch 10,
**dadurch gekennzeichnet, dass**
eine Öffnung im Kunststoffteil (34), mittels welcher ein Lagerelement (40, 42) für das Fronthaubenschloss (10) aufnehmbar ist, durch das Spritzgussverfahren ausgebildet wird.

12. Verfahren nach einem der Ansprüche 9 bis 11,
**dadurch gekennzeichnet, dass**
eine Öffnung im Trägerprofil (32), mittels welcher ein Lagerelement (40, 42) für das Fronthaubenschloss (10) aufnehmbar ist, durch den Innenhockdruckumformprozess ausgebildet wird.

13. Verfahren nach einem der Ansprüche 9 bis 12,
**dadurch gekennzeichnet, dass**
eine Gewindebuchse (36, 38) im Kunststoffteil (34) und/oder im Trägerprofil (32), mittels welcher das Lagerelement (40, 42) befestigbar ist, während des Spritzgussverfahrens bzw. während des Innenhochdruckumformprozesses ausgebildet oder eingefügt wird.

14. Verfahren nach einem der Ansprüche 10 bis 13,
**dadurch gekennzeichnet, dass**
das Lagerelement (40, 42) als Einlegerelement während des Spritzgussverfahrens integriert wird.

15. Verfahren nach einem der Ansprüche 10 bis 14,
**dadurch gekennzeichnet, dass**
das Lagerelement (40, 42) mittels des Spritzgussverfahrens ausgebildet wird.

## Claims

1. Front end mount (30) for a body of a passenger car, comprising a mount profile (32) which is in particular made of a metallic material and which is completed by a plastic part (34) provided in at least some regions of the mount profile (32) to form a hybrid component, wherein by means of the plastic part (34) a bonnet lock (10) can be at least partially accommodated,
**characterised in that**
at least one component of the bonnet lock (10) is at least partially represented by the plastic part (34).

2. Front end mount (30) according to claim 1,
**characterised in that**
at least one opening by means of which a bearing element (40, 42) for the bonnet lock (10) can be accommodated is provided in the plastic part (34) and/or in the mount profile (32).

3. Front end mount (30) according to claim 2,
**characterised in that**
the bearing element (40, 42) can be secured to the plastic part (34) and/or to the mount profile (32).

4. Front end mount (30) according to claim 2 or 3,
**characterised in that**
the bearing element (40, 42) is designed as a screw element (40, 42).

5. Front end mount (30) according to claim 3 or 4,
**characterised in that**
at least one threaded bush (36, 38) is provided in the mount profile (32) and/or in the plastic part (34).

6. Front end mount (30) according to any of the preceding claims,
**characterised in that**
at least one further bearing element (40, 42) can be accommodated, which can be joined to the other bearing element (40, 42) by means of a connecting element (46), in particular a bow (46), wherein the connecting element (46) can be joined to the plastic part (34) and/or to the mount profile (32).

7. Front end mount (30) according to claim 6,
**characterised in that**
the connecting element (46) can be joined to the plastic part (34) and/or to the mount profile (32) by means of a clip-on and/or a plug-in and/or a snap-in connection.

8. Method for producing a front end mount (30) for a body of a passenger car, wherein a mount profile (32) made in particular of a metallic material is completed to form a hybrid component by a plastic part (34) provided in at least some regions of the mount profile (32), by means of which a bonnet lock (10) can be at least partially accommodated,
**characterised in that**
at least one component of the bonnet lock (10) is at least partially represented by the plastic part (34).

9. Method according to claim 8,
**characterised in that**
the mount profile (32) is formed by means of a hydroforming process.

10. Method according to claim 8 or 9,
**characterised in that**
the plastic part (34) is formed by means of an injection moulding process.

11. Method according to claim 10,
**characterised in that**
an opening in the plastic part (34), by means of which opening a bearing element (40, 42) for the bonnet lock (10) can be accommodated, is formed by the injection moulding process.

12. Method according to any of claims 9 to 11,
**characterised in that**
an opening in the plastic part (34), by means of which opening a bearing element (40, 42) for the bonnet lock (10) can be accommodated, is formed by the hydroforming process.

13. Method according to any of claims 9 to 12,
**characterised in that**
a threaded bush (36, 38) in the plastic part (34) and/or in the mount profile (32), by means of which threaded bush (36, 38) the bearing element (40, 42) can be secured, is formed or introduced during the injection moulding process or during by the hydroforming process.

14. Method according to any of claims 10 to 13,
**characterised in that**
the bearing element (40, 42) is integrated during the injection moulding process as an insert element.

15. Method according to any of claims 10 to 14,
**characterised in that**
the bearing element (40, 42) is formed by means of the injection moulding process.

## Revendications

1. Support d'extrémité avant (30) pour une carrosserie d'un véhicule de tourisme doté en particulier d'un profilé de support (32) fabriqué en matière métallique, lequel vient en complément d'un élément hybride par une partie en matière plastique (34) prévue au moins partiellement sur le profilé de support (32), dans lequel une serrure de capot avant (10) est au moins partiellement logée au moyen de la partie en matière plastique (34), **caractérisé en ce qu'**au moins un élément de construction de la serrure de capot avant (10) est formé au moins partiellement par une partie en matière plastique (34).

2. Support d'extrémité avant (30) selon la revendication 1, **caractérisé en ce que** dans la partie en matière plastique (34) et/ou dans le profilé de support (32) est prévue au moins une ouverture, au moyen de laquelle un élément de support (40, 42) pour la serrure de capot avant (10) peut être logé.

3. Support d'extrémité avant (30) selon la revendication 2, **caractérisé en ce que** dans l'élément de support (40, 42) peut être fixé à la partie en matière plastique (34) et/ou au profilé de support (32).

4. Support d'extrémité avant (30) selon l'une quelconque des revendications 2 ou 3, **caractérisé en ce que** l'élément de support (40, 42) est conçu comme un élément fileté (40,42).

5. Support d'extrémité avant (30) selon l'une quelconque des revendications 3 ou 4, **caractérisé en ce que** dans le profilé de support (32) et/ou dans la partie en matière plastique (34) est prévue au moins une douille taraudée (36, 38).

6. Support d'extrémité avant (30) selon l'une quelconque des revendications précédentes, **caractérisé en ce qu'**au moins un autre élément de support (40, 42) peut être logé, qui au moyen d'un élément de liaison (46), en particulier un étrier (46), peut être relié à l'autre élément de support (40, 42), l'élément de liaison (46) pouvant être relié à la partie en matière plastique (34) et/ou au profilé de support (36).

7. Support d'extrémité avant (30) selon la revendication 6, **caractérisé en ce que** l'élément de liaison (46) peut être relié à la partie en matière plastique (34) et/ou au profilé de support (32) au moyen d'un élément de liaison à clips et/ou à emboîtement et/ou à encliquetage.

8. Procédé de fabrication d'un support d'extrémité avant (30) pour une carrosserie d'un véhicule de tourisme, sur lequel un profilé (32) fabriqué en particulier en matière métallique vient en complément d'un élément hybride par une partie en matière plastique (34) prévue au moins partiellement sur le profilé de support (32), dans lequel une serrure de capot avant (10) est au moins partiellement logée au moyen de la partie en matière plastique (34), **caractérisé en ce qu'** au moins un élément de construction de la serrure de capot avant (10) est formé au moins partiellement par une partie en matière plastique (34).

9. Procédé selon la revendication 8, **caractérisé en ce que** le profilé de support (32) est formé à l'aide d'un processus de formage sous haute pression interne.

10. Procédé selon l'une quelconque des revendications 8 ou 9, **caractérisé en ce que** la partie en matière plastique (34) est formé à l'aide d'un procédé de moulage par injection.

11. Procédé selon la revendication 10, **caractérisé en ce qu'**une ouverture dans la partie en matière plastique (34), au moyen de laquelle un élément de support (40, 42) pour la serrure de capot avant (10) peut être logé, est formée par le procédé de moulage par injection.

12. Procédé selon l'une quelconque des revendications 9 à 11, **caractérisé en ce qu'**une ouverture dans la partie en matière plastique (32), au moyen de laquelle un élément de support (40, 42) pour la serrure de capot avant (10) peut être logé, est formée par le processus de formage sous haute pression interne.

13. Procédé selon l'une quelconque des revendications 9 à 12, **caractérisé en ce qu'**une douille taraudée (36, 38) est formée ou insérée dans la partie en matière plastique (34) et/ou dans le profilé de support (32), au moyen de laquelle l'élément de support (40, 42) peut être fixée, pendant le procédé de moulage par injection ou pendant le processus de formage sous haute pression interne.

14. Procédé selon l'une quelconque des revendications 10 à 13, **caractérisé en ce que** l'élément de support (40, 42) est intégré en tant qu'élément d'insertion pendant le procédé de moulage par injection.

15. Procédé selon l'une quelconque des revendications 10 à 14, **caractérisé en ce que** l'élément de support (40, 42) est formé à l'aide d'un procédé de moulage par injection.
